# EUROPEAN PATENT SPECIFICATION

(11) **EP 1 954 373 B1**
(45) Date of publication and mention of the grant of the patent: **20.04.2011**
(21) Application number: 06825260.0
(22) Date of filing: 29.09.2006
(51) Int. Cl.: B01D 39/16, B32B 5/26

(54) **COALESCING FILTRATION MEDIUM AND PROCESS**
KOALESZIERENDES FILTRATIONSMEDIUM UND VERFAHREN
MILIEU FILTRANT COALESCENT ET PROCEDE ASSOCIE

(30) Priority: 30.09.2005 US 241598
(43) Date of publication of application: 13.08.2008
(73) Proprietor: E.I. DU PONT DE NEMOURS AND COMPANY, Wilmington, DE 19898 (US)
(72) Inventor: JONES, David, Charles, Midlothian, VA 23113 (US); LIM, Hyun, Sung, Midlothian, VA 23113 (US); KELLER, Karsten, Hockessin, DE 19707 (US)
(74) Representative: Matthews, Derek Peter
(86) International application number: PCT/US2006/038095
(87) International publication number: WO 2007/041310

(56) References cited:
- EP-A- 1 745 808
- WO-A-2005/107557
- WO-A-2006/071979
- US-A1- 2003 010 002
- US-A1- 2004 255 783

## Description

### BACKGROUND OF THE INVENTION

### Field of the Invention

The present invention relates to a coalescing filtration medium, specifically a filtration medium for removing liquid aerosols, oil or water from compressed air or gas streams.

### Background of the Invention

Gas streams used in compressors or vacuum pumps and refrigerants used in refrigeration or air conditioning compressors can become contaminated with liquid aerosols, oil and water. A filtration apparatus can be used to remove the contaminant. The contaminant is collected on a coalescing filtration medium used in the filtration apparatus. The coalescing filtration medium can be made from woven on nonwoven materials. Such materials are comprised of dense mats of cellulose, glass or synthetic fibers. In order to be efficient, the coalescing filtration medium must trap the contaminant while allowing the gas stream to flow through the filter media with as little impedance or pressure drop as possible allowing adequate air permeability. It would also be useful that the basis weight of the coalescing filtration medium be minimized to reduce cost.

U.S. Patent Application No. 2004/0038014 describes a polymeric filter media for removing particulate material from a gas or liquid stream. The filter media are made from organic polymer fibers with a diameter of 0.03 to 0.5 microns, the filter media having a thickness of 1 to 100 microns and the filter media having a solidity of 5% to 50%. Examples of this filter media disclose using hundreds or thousands of layers to complete the polymeric filter media.

U.S. Patent Application No. 2004/0261381 describes a filtration element including a membrane for removing particles from a gas stream and particularly de-oiling an air stream in a compressor or a vacuum pump. The membrane includes at least one layer of nanofiber material that is made from polyamide and has a fiber diameter of 50 to 1000 nanometers and a basis weight of 20 to 200 g/m² . However, the membrane must be disposed between a plurality of filter layers acting as additional filter components. Further examples of filtration media comprising nanofiber layers may be found in US 2003/0010002, US 2004/0255783, WO 2006/071979, EP 1745808 and WO 2005/107557.

It would be advantageous to have a coalescing filtration medium made from a nanofiber web that is efficient at removing liquid aerosols, oil or water from a gas stream while having a low pressure drop, high air permeability, low basis weight and a minimum number of filter layers.

### SUMMARY OF THE INVENTION

In a first embodiment, the present invention is directed to a coalescing filtration medium for removing liquid aerosols, oil and/or water from a gas stream consisting of a nanofiber web of a single nanofiber layer of continuous, substantially polyolefin-free, polymeric nanofibers, wherein said nanofiber layer has an average fiber diameter of between 50 to 500 nm and has a basis weight of between 10 g/_{M}² to 75 g/m².

A second embodiment of the present invention is directed to a process for removing liquid aerosols, oil and/or water from a gas stream comprising passing a gas stream containing liquid aerosols, oil and/or water through a coalescing filtration medium consisting of a nanofiber web of a single nanofiber layer of continuous, substantially polyolefin-free, polymeric nanofibers, wherein said nanofiber layer has an average fiber diameter of between 50 to 500 nm and has a basis weight of between 10 g/m² to 75 g/m², and removing at least a portion of said liquid aerosols, oil and/or water from said gas stream.

### DEFINITIONS

The term "coalescing filtration medium" or "medium" refers to a material or collection of materials through which liquid or liquid-like substances such as liquid aerosols, oil and/or water carrying gas passes, with a concomitant and at least temporary deposition of the liquid or liquid-like substances in or on the medium. It should be noted that the liquid or liquid-like substances can be one type of substance or a combination of two or more types of substances. In addition to liquid or liquid-like substances and due to the nature of the medium, the medium can block solid particulate materials as well.

The term "nanofibers" refers to fibers having diameters of less than 1,000 nanometers.

The term "nanofiber web" refers to the sheet-like nonwoven made from nanofibers produced by a spinning process such as electrospinning or electroblowing. The web consists of a single nanofiber layer formed by one or more collection passes or by employing one or more spinning beams.

The term "nanofiber layer" refers to a group of fibers formed during the spinning process in only a single pass and by a single spinning beam. In physical terms, the nanofiber layer formed in nonwoven processes would not be pulled apart into more than one layer of nanofibers by ordinary means.

The term "pass" refers to the process of forming a nanofiber layer in which the nanofibers are formed from one spinning run using one spinning beam. The term "passes" refers to more than one spinning run using one spinning beam. Specifically, after the first pass, the nanofiber layer formed is passed through the spinning area one or more additional times with the subsequent nanofiber layers added to the existing nanofiber layer.

The term "spinning beam" or "spin pack" refers to the spinning apparatus. Each spinning beam or spin pack can be made up of many spinning nozzles in either a linear or radial array to produce a nanofiber layer. If multiple spinning beams are used in a single spinning apparatus, then a single spinning pass would produce multiple nanofiber layers.

### BRIEF DESCRIPTION OF THE DRAWINGS

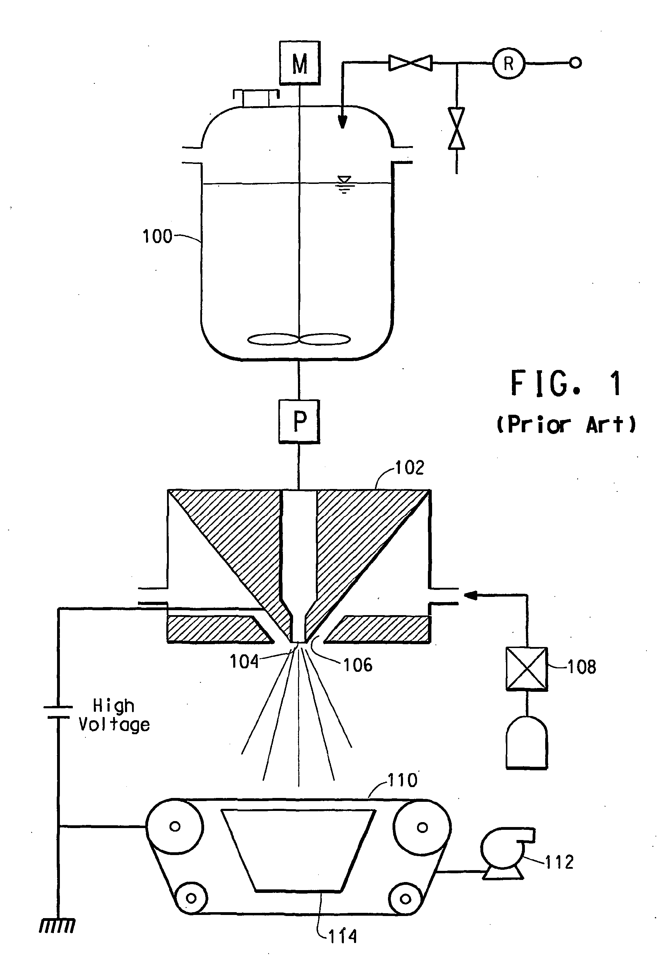

Figure 1 is an illustration of a prior art electroblowing apparatus for forming nanofibers suitable for use in the present invention.

### DETAILED DESCRIPTION OF THE INVENTION

The invention relates to a coalescing Filtration medium which can be used for removing liquid aerosols, oil and/or water from compressed air or gas streams. In particular, this medium can be used for removing oil mist from an air stream in a compressor or a vacuum pump.

The coalescing filtration medium consists of a nanofiber web of a single nanofiber layer. The nanofiber layer comprises a collection of substantially continuous, substantially polyolefin-free, organic polymeric nanofibers having diameters less than about 800 nm. The nanofiber layer can be formed by electrostatic blow spinning, hereinafter referred to as "electroblowing". A process for forming nanofibers via electroblowing is disclosed in PCT Patent Publication Number WO 03/080905A (corresponding to U.S. Serial No. 10/477,882, filed November 19, 2003), WO 03/080905A discloses an apparatus and method for producing a nanofiber web, the apparatus essentially as shown in Figure 1.

The method comprises feeding a stream of polymeric solution comprising a polymer and a solvent from a storage tank 100 to a series of spinning nozzles 104 within a spinneret 102 to which a high voltage is applied through which the polymeric solution is discharged. Meanwhile, compressed air that is optionally heated in air heater 108 is issued from air nozzles 106 disposed in the sides or the periphery of spinning nozzle 104. The air is directed generally downward as a blowing gas stream which envelopes and forwards the newly issued polymeric solution and aids in the formation of the fibrous web, which is collected on a grounded porous collection belt 110 above a vacuum chamber 114, which has vacuum applied from the inlet of air blower 112.

The average fiber diameter of the nanofibers is between about 50 nm to about 500 nm, and even between about 100 nm to about 400 nm. The nanofiber layer has a basis weight of between about 10 g/m² to about 75 g/m². The nanofiber layer has a thickness of about 10 µm to about 600 µm, even between about 20 µm to about 250 µm, and even between about 30 µm to about 200 µm.

The electroblowing process allows a nanofiber layer of suitable basis weight for use in an air coalescing filtration medium to be formed in a single pass because a higher throughput is possible than previously known in the production of nanofibers. In view of the high throughput of the electroblowing process, a nanofiber layer of between 10 to 75 g/m² can be formed with a collection belt speed of at least about 0.75 m/min, and even at least about 1.5 m/min. The polymer solution throughput in the electroblowing process for forming nanofibers is at least about 1 cm³/min/hole of the spinneret, and advantageously at least about 2 cm³/miNhole. Therefore, by configuring the spinneret to have a series of spinning nozzles or holes along the length of the spinneret commonly referred to as a spinning beam, and delivering the polymer solution through each nozzle or hole at such high rates of flow, a higher basis weight nanofiber layer than known to date can be formed in a single pass. Depending on the polymer solution throughput and the collection belt speed a single nanofiber layer having basis weights of between 10 g/m² to 75 g/m² can be formed in a single pass.

In contrast, conventional processes for forming nanofiber webs of suitable basis weight require repeated passes of a collection apparatus through the nanofiber formation process to build up to a basis weight of even 1 g/m². By forming the nanofiber web in one pass according to the present invention, less handling is required, reducing the opportunity for defects to be introduced in the final nanofiber web. The higher polymer solution throughput of the electroblowing process provides a more economical process than previously known in the production of nanofibers.

The nanofiber layer of the coalescing filtration medium is made from organic polymeric nanofibers. These polymeric fibers are made from a synthetic polymer which is selected from polyamide, polyimide, polyaramid, polybenzimidazole, polyetherimide, polyacrylonitrile, poly(ethylene terephthalate), polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vinyl butylene) and copolymer or derivative compounds thereof. The nanofiber web for the coalescing filtration medium should be polyolefin-free, since polyolefins tend to swell upon contact with oil, which will ultimately increase the pressure drop and reduce the gas flow through the filter.

The coalescing filtration medium of the invention can be fabricated into any desired filter format such as cartridges, flat disks and canisters. Within such structures, the media can be pleated, rolled or otherwise positioned on support structures. The coalescing filtration medium of the invention can be used in virtually any conventional structure including oval filters, cartridge filters, spiral wound filter structures and can be used in pleated, Z filter or other geometric configurations involving the formation of the medium to useful shapes or profiles. Advantageous geometries include pleated and cylindrical patterns. Such cylindrical patterns are generally preferred because they are relatively straightforward to manufacture, use conventional filter manufacturing techniques, and are relatively easy to service. Pleating of media increases the media surface area within a given volume.

The filtration efficiency of the coalescing filtration medium is at least about 99.5%, even at least about 99.9% and even at least about 99.999%.

The initial pressure drop (also referred to herein as "pressure drop" or "pressure differential") of the coalescing filtration medium is less than about 200 mm H₂O, and even less than about 100 mm H₂O. The pressure drop across a filter increases over time during use, as liquid or liquid-like substances plug the filter. Assuming other variables to be held constant, the higher the pressure drop across a filter, the shorter the filter life. A filter typically is determined to be in need of replacement when a selected limiting pressure drop across the filter is met. The limiting pressure drop varies depending on the application. Since this buildup of pressure is a result of substance load, for systems of equal efficiency, a longer life is typically directly associated with higher load capacity. Efficiency is the propensity of the medium to trap, rather than to pass, substances. In general the more efficient filter media are at removing substances from a gas flow stream, the more rapidly the filter media will approach the "lifetime" pressure differential, assuming other variables to be held constant.

The higher the air permeability of the coalescing filtration medium, the lower the pressure drop, therefore the longer the filter life, assuming other variables are held constant. Advantageously, the Frazier air permeability of the coalescing filtration medium of the invention is preferably at least about 1 m³/min/m² and even between about 1 to about 50 m³/min/m².

### TEST METHODS

In the description above and in the non-limiting examples that follow, the following test methods were employed to determine various reported characteristics and properties. ASTM refers to the American Society for Testing and Materials and CAGI refers to Compressed Air and Gas Institute.

Filtration Efficiency is a measure of the ability of a filter to remove particles from a gas stream, is conducted according to CAGI ADF 400, and is reported in percent. Test conditions include a contaminant of 30 weight oil at a concentration of 10 mg/m³ and air flowing at a face velocity of 0.2 m/s across a 90 mm diameter flat oil saturated test specimen. The sample efficiencies were measured at a temperature of 21 °C, a relative humidity of 45% and a barometric pressure of 740 mm Hg. The data were collected using an MIE DataRam 4 Model DR-40000 test apparatus (available from Thermo Electron Corporation).

Pressure Drop or differential pressure is a measure of the change in pressure of a gas stream.across an oil saturated filter, is conducted according to CAGI ADF 400, and is reported in mm of water column, also referred to herein as mm H₂O. The testing conditions are described under the Filtration Efficiency test method.

Frazier Air Permeability is a measure of air flow passing through a porous material under a stated pressure differential between the surfaces of the porous material, is conducted according to ASTM D-737 and is reported in m³/min/m². It measures the volume of air flow through a material at a differential pressure of 0.5 inches (12.7 mm) water. An orifice is mounted in a vacuum system to restrict flow of air through sample to a measurable amount. The size of the orifice depends on the porosity of the material. Frazier air permeability is measured in units of ft³/Min/ft² using a Sherman W. Frazier Co. dual manometer with calibrated orifice, and converted to units of m³/min/m².

Fiber Diameter was determined as follows. Ten scanning electron microscope (SEM) images at 5,000x magnification were taken of each nanofiber layer sample. The diameter of eleven (11) clearly distinguishable nanofibers were measured from each SEM image and recorded. Defects were not included (i.e., lumps of nanofibers, polymer drops, intersections of nanofibers). The average fiber diameter for each sample was calculated and reported in nanometers (nm).

Thickness was determined by ASTM D-1777 and is reported in micrometers (µm).

Basis weight was determined by ASTM D-3776 and reported in g/m².

### EXAMPLES

Hereinafter the present invention will be described in more detail in the following examples. An electro-blown spinning or electroblowing process and apparatus for forming a nanofiber web of the invention as disclosed in PCT publication number WO 2003/080905, as illustrated in Fig. 1 hereof, was used to produce the nanofiber layers and webs of the Examples below.

Nanofiber webs of a single nanofiber layer were made by electroblowing a solution of nylon 6,6 polymer having a density of 1.14 g/cc (available from E. I. du Pont de Nemours and Company, Wilmington, Delaware) at 24 weight percent in formic acid at 99% purity (available from Kemira Oyj, Helsinki, Finland). The polymer and solvent were fed into a solution mix tank, the solution transferred into a reservoir and metered through a gear pump to an electroblowing spin pack having a series of spinning nozzles and gas injection nozzles. The spin pack was maintained at temperatures between about 13°C and about 26°C with the pressure of the solution in the spinning nozzles between about 9 bar and about 13 bar. The spinneret was electrically insulated and applied with a voltage of 65 kV. Compressed air at a temperature of between about 34 °C and about 79° C was injected through the gas injection nozzles from the spin pack at a rate of about 4.7 m³/min to about 6 m³/min and a pressure of between 240 mm H₂O and about 410 mm H₂O. The fibers exited the spinning nozzles into air at atmospheric pressure, a relative humidity of between about 50% and about 72 % and a temperature of between about 13 °C and about 24° C. The fibers were laid down the distance of between about 300 mm and about 360 mm below the exit of the pack onto a porous belt moving at a speed of about 2.0 m/min to about 14.8 m/min. A vacuum chamber beneath the porous belt assisted in the laydown of the fibers.

### EXAMPLE 1

A nanofiber web of a single nanofiber layer was mode. The spin pack was at room temperature of 13°C with the pressure of the solution in the spinning nozzles at 13 bar, and compressed air at a temperature of 34°C was injected through the gas injection nozzles from the spin pack at a rate of 4.7 m³/min and a pressure of 240 mm H₂O. The fibers formed were laid down 300 mm below the exit of the pack onto a porous collector belt moving at 5.67 m/minute. A vacuum chamber beneath the belt assisted in the laydown of the fibers into a single nanofiber layer which comprised the nanofiber web. The nanofiber web properties are summarized in the Table.

### EXAMPLE 2

Example 2 was prepared in an analogous manner to Example 1 but with slight process condition changes in order to make a nanofiber web of a single nanofiber layer with a higher basis weight from a single pass through the one beam spinning machine.

The fibers formed were laid down 250 mm below the exit of the pack onto a porous collector belt moving at 2.1 m/minute. A vacuum chamber beneath the belt assisted in the laydown of the fibers into a single nanofiber layer which comprised the nanofiber web. The nanofiber web properties are summarized in the Table.

### COMPARATIVE EXAMPLES A AND B

Wet laid microglass webs were obtained for Comparative Example A as LydAir® MG 1909 ASHRAE class 1000, DOP particle (0.3 µm) filtration efficiency at 15%, and for Comparative Example B as LydAir® MG 1894 ASHRAE class 1000, DOP particle (0.3 pm) filtration efficiency at 50% (both available from Lydall Filtration/Separation Inc., Manchester, Connecticut). Nanofiber layer properties are summarized in the Table.

**TABLE**

| **Nanofiber Web Properties** | | | | | | |
|---|---|---|---|---|---|---|
| Ex. | Average Fiber Diameter (nm) | Basis Weight (g/m²) | Thickness (µm) | Frazier Air Permeability (m³/min/m²) | Pressure Drop (mm H₂O) | Filtration Efficiency (%) |
| 1 | 414 | 10.4 | 39 | 7.8 | 30 | 99.998 |
| 2 | 463 | 33.1 | 100 | 1.7 | 84 | 99.999 |
| A | | 64.4 | 384 | 41.4 | 30 | 92.600 |
| B | | 69.5 | 396 | 12.3 | 66 | 96.630 |

Examples 1 and 2 show improved filtration efficiency, reduced basis weight and thickness while maintaining comparable Frazier air permeability and pressure drop as compared to Comparative Example A and B.

## Claims

1. A coalescing filtration medium for removing liquid aerosols, oil and/or water from a gas stream consisting of a nanofiber web of a single nanofiber layer of continuous, substantially polyolefin-free, polymeric nanofibers, **characterised in that** the nanofiber layer has an average fiber diameter of between 50 nm to 500 nm and has a basis weight of between 10 g/m² to 75 g/m².

2. The coalescing filtration medium according to claim 1, wherein the nanofiber layer has a thickness of between 10 µm to 600 µm.

3. The coalescing filtration medium according to claim 1, wherein the nanofiber web has a Frazier air permeability of at least 1 m³/min/m².

4. The coalescing filtration medium according to claim 1, wherein the nanofiber web has a filtration efficiency, as determined from test method CAGI ADF 400, of at least 99.5% when challenged with a contaminant of 30 weight oil at a concentration of 10 mg/m³ and air flowing at a face velocity of 0.2 m/s across a 90 mm diameter flat oil saturated test specimen.

5. The coalescing filtration medium according to claim 4, wherein the nanofiber web has a filtration efficiency of at least 99.9%.

6. The coalescing filtration medium according to claim 5, wherein the nanofiber web has a filtration efficiency of at least 99.999%.

7. The coalescing filtration medium according to claim 1, wherein the nanofiber web has a pressure drop of less than 200 mm H₂O.

8. The coalescing filtration medium according to claim 1, wherein the polymeric nanofibers are made from a synthetic polymer which is selected from polyamide, polyimide, polyaramid, polybenzimidazole, polyetherimide, polyacrylonitrile, poly(ethylene terephthalate), polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vinyl butylene) and copolymer or derivative compounds thereof.

9. The coalescing filtration medium according to claim 8, wherein the synthetic polymer is polyamide.

10. A process for removing liquid aerosols, oil and/or water from a gas stream comprising passing a gas stream containing liquid aerosols, oil and/or water through coalescing filtration medium consisting of a nanofiber web of a single nanofiber layer of continuous, substantially polyolefin-free, polymeric nanofibers, **characterised in that** the nanofiber layer has an average fiber diameter between 50 nm to 500 nm and has a basis weight of between 10 g/m² to 75 g/m², and removing at least a portion of said liquid aerosols, oil and/or water from said gas stream.

11. The process according to claim 10, wherein the nanofiber layer has a thickness of between 10 µm to 600 µm.

12. The process according to claim 10, wherein the nanofiber web has a Frazier air permeability of at least 1 m³/min/m².

13. The process according to claim 10, wherein the nanofiber web has a filtration efficiency, as determined from test method CAGI ADF 400, of at least 99.5% when challenged with a contaminant of 30 weight oil at a concentration of 10 mg/m³ and air flowing at a face velocity of 0.2 m/s across a 90 mm diameter flat oil saturated test specimen.

14. The process according to claim 13, wherein the nanofiber web has a filtration efficiency of at least 99.9%.

15. The process according to claim 14, wherein the nanofiber web has a filtration efficiency of at least 99.999%.

16. The process according to claim 10, wherein the nanofiber web has a pressure drop of less than 200 mm H₂O.

17. The process according to claim 10, wherein the polymeric nanofibers are made from a synthetic polymer which is selected from polyamide, polyimide, polyaramid, polybenzimidazole, polyetherimide, polyacrylonitrile, poly(ethylene terephthalate), polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vlnyl butylene) and copolymer or derivative compounds thereof.

18. The process according to claim 17, wherein the synthetic polymer is polyamide.

## Patentansprüche

1. Koaleszierendes Filtriermedium zum Entfernen von flüssigen Aerosolen, Öl und/oder Wasser aus einem Gasstrom, das aus einem Nanofasernetzwerk aus einer einzigen Nanofaserlage endloser, im Wesentlichen polyolefinfreier polymerer Nanofasern besteht, **dadurch gekennzeichnet, dass** die Nanofaserlager einen durchschnittlichen Faserdurchmesser zwischen 50 nm und 500 nm aufweist und ein Flächengewicht zwischen 10 g/m² und 75 g/m² aufweist.

2. Koaleszierendes Filtriermedium nach Anspruch 1, wobei die Nanofaserlage eine Dicke zwischen 10 µm und 600 µm aufweist.

3. Koaleszierendes Filtriermedium nach Anspruch 1, wobei das Nanofasernetzwerk eine Frazier-Luftdurchlässigkeit von mindestens 1 m³/min/m² aufweist.

4. Koaleszierendes Filtriermedium nach Anspruch 1, wobei das Nanofasernetzwerk eine Filtriereffizienz, wie durch die Testmethode CAGI ADF 400 bestimmt, von mindestens 99,5 % bei der Herausforderung mit einer Kontaminante von Öl einer Dickflüssigkeit von 30 in einer Konzentration von 10 mg/m³ und bei einer Luftströmung mit einer Einströmgeschwindigkeit von 0,2 m/s über einen flachen ölgesättigten Prüfkörper von 90 mm Durchmesser aufweist.

5. Koaleszierendes Filtriermedium nach Anspruch 4, wobei das Nanofasernetzwerk eine Filtriereffizienz von mindestens 99,9 % aufweist.

6. Koaleszierendes Filtriermedium nach Anspruch 5, wobei das Nanofasernetzwerk eine Filtriereffizienz von mindestens 99,999 % aufweist

7. Koaleszierendes Filtriermedium nach Anspruch 1, wobei das Nanofasernetzwerk einen Druckabfall von weniger als 200 mm H₂O aufweist.

8. Koaleszierendes Filtriermedium nach Anspruch 1, wobei die polymeren Nanofasern aus einem synthetischen Polymer hergestellt sind, das ausgewählt ist unter Polyamid, Polyimid, Polyaramid, Polybenzimidazol, Polyetherimid, Polyacrylnitril, Poly(ethylenterephthalat), Polyanilin, Poly(ethylenoxid), Poly(ethylennaphthalat), Poly(butylenterephthalat), Styrolbutadienkautschuk, Polystyrol, Poly(vinylchlorid), Poly(vinylalkohol), Poly(vinylidenfluorid), Poly(vinylbutylen) und Copolymer- oder Derivatverbindungen davon.

9. Koaleszierendes Filtriermedium nach Anspruch 8, wobei das synthetische Polymer Polyamid ist.

10. Verfahren zum Entfernen von flüssigen Aerosolen, Öl und/oder Wasser aus einem Gasstrom, umfassend das Hindurchführen eines Gasstroms, der flüssige Aerosole, Öl und/oder Wasser enthält, durch ein koaleszierendes Filtriermedium, das aus einem Nanofasernetzwerk aus einer einzigen Nanofaserlage endloser, im wesentlichen polyolefinfreier polymerer Nanofasern besteht, **dadurch gekennzeichnet, dass** die Nanofaserlage einen durchschnittlichen Faserdurchmesser zwischen 50 nm und 500 nm und ein Flächengewicht zwischen 10 g/m² und 75 g/m² aufweist, und durch das Entfernen mindestens eines Teils der flüssigen Aerosole, des Öls und/oder Wassers aus dem Gasstrom.

11. Verfahren nach Anspruch 10, wobei die Nanofaserlage eine Dicke zwischen 10 µm und 600 µm aufweist.

12. Verfahren nach Anspruch 10, wobei das Nanofasernetzwerk eine Frazier-Luftdurchlässigkeit von mindestens 1 m³/min/m² aufweist.

13. Verfahren nach Ansnpruch 10, wobei das Nanofasernetzwerk eine Filtriereffizienz, wie durch die Testmethode CAGI ADF 400 bestimmt, von mindestens 99,5 % bei der Herausforderung mit einer Kontaminante von Öl einer Dickflüssigkeit von 30 in einer Konzentration von 10 mg/m³ und bei einer Luftströmung mit einer Einströmgeschwindigkeit von 0,2 m/s über einen flachen ölgesättigten Prüfkörper von 90 mm Durchmesser aufweist.

14. Verfahren nach Anspruch 13, wobei das Nanofasernetzwerk eine Filtriereffizienz von mindestens 99,9 % aufweist.

15. Verfahren nach Anspruch 14, wobei das Nanofasernetzwerk eine Filtriereffizienz von mindestens 99,999 % aufweist

16. Verfahren nach Anspruch 10, wobei das Nanofasernetzwerk einen Druckabfall von weniger als 200 mm H₂O aufweist.

17. Verfahren nach Anspruch 10, wobei die polymeren Nanofasern aus einem synthetischen Polymer hergestellt sind, das ausgewählt ist unter Polyamid, Polyimid, Polyaramid, Polybenzimidazol, Polyetherimid, Polyacrylnitril, Poly(ethylenterephthalat), Polyanilin, Poly(ethylenoxid), Poly(ethylennaphthalat), Poly(butylenterephthalat), Styrolbutadienkautschuk, Polystyrol, Poly(vinylchlorid), Poly(vinylalkohol), Poly(vinylidenfluorid), Poly(vinylbutylen) und Copolymer- oder Derivatverbindungen davon.

18. Verfahren nach Anspruch 17, wobei das synthetische Polymer Polyamid ist.

## Revendications

1. Milieu filtrant coalescent pour éliminer les aérosols liquides, l'huile et/ou l'eau d'un courant gazeux, constitué d'un voile de nanofibres comprenant une seule couche de nanofibres constituée de nanofibres polymères continues, sensiblement dépourvues de polyoléfine, **caractérisé en ce que** la couche de nanofibres présente un diamètre moyen des fibres compris entre 50 nm et 500 nm et a une masse surfacique comprise entre 10 g/m² et 75 g/m².

2. Milieu filtrant coalescent selon la revendication 1, dans lequel la couche de nanofibres a une épaisseur comprise entre 10 µm et 600 µm.

3. Milieu filtrant coalescent selon la revendication 1, dans lequel le voile de nanofibres a une perméabilité à l'air Frazier d'au moins 1 m³/min/m².

4. Milieu filtrant coalescent selon la revendication 1, dans lequel le voile de nanofibres a une efficacité de filtration, telle que mesurée par la méthode d'essai CAGI ADF 400, d'au moins 99,5% lorsqu'il est mis à l'épreuve avec un contaminant à base d'huile 30W à une concentration de 10 mg/m³ et de l'air circulant à une vitesse frontale de 0,2 m/s sur un spécimen d'essai plat saturé d'huile de 90 mm de diamètre.

5. Milieu filtrant coalescent selon la revendication 4, dans lequel le voile de nanofibres a une efficacité de filtration d'au moins 99,9%.

6. Milieu filtrant coalescent selon la revendication 5, dans lequel le voile de nanofibres a une efficacité de filtration d'au moins 99,999%.

7. Milieu filtrant coalescent selon la revendication 1, dans lequel le voile de nanofibres a une perte de charge qui est inférieure à 200 mm de H₂O.

8. Milieu filtrant coalescent selon la revendication 1, dans lequel les nanofibres polymères sont constituées d'un polymère synthétique qui est choisi parmi un polyamide, polyimide, polyaramide, polybenzimidazole, polyétherimide, polyacrylonitrile, poly(téréphtalate d'éthylène), polyaniline, poly(oxyde d'éthylène), poly(naphtalate d'éthylène), poly(téréphtalate de butylène), caoutchouc de styrène-butadiène, polystyrène, poly(chlorure de vinyle), poly(alcool vinylique), poly(fluorure de vinylidène), poly(vinylbutylène) et leurs copolymères ou dérivés.

9. Milieu filtrant coalescent selon la revendication 8, dans lequel le polymère synthétique est un polyamide.

10. Procédé pour éliminer les aérosols liquides, l'huile et/ou l'eau d'un courant gazeux, comprenant le passage d'un courant gazeux contenant des aérosols liquides, de l'huile et/ou de l'eau à travers un milieu filtrant coalescent constitué d'un voile de nanofibres comprenant une seule couche de nanofibres constituée de nanofibres polymères continues, sensiblement dépourvues de polyoléfine, **caractérisé en ce que** la couche de nanofibres présente un diamètre moyen des fibres compris entre 50 nm et 500 nm et a une masse surfacique comprise entre 10 g/m² et 75 g/m², et l'élimination d'au moins une partie desdits aérosols liquides, huile et/ou eau dudit courant gazeux.

11. Procédé selon la revendication 10, dans lequel la couche de nanofibres a une épaisseur comprise entre 10 µm et 600 µm.

12. Procédé selon la revendication 10, dans lequel le voile de nanofibres a une perméabilité à l'air Frazier d'au moins 1 m³/min/m².

13. Procédé selon la revendication 10, dans lequel le voile de nanofibres a une efficacité de filtration, telle que mesurée par la méthode d'essai CAGI ADF 400, d'au moins 99,5% lorsqu'il est mis à l'épreuve avec un contaminant à base d'huile 30W à une concentration de 10 mg/m³ et de l'air circulant à une vitesse frontale de 0,2 m/s sur un spécimen d'essai plat saturé d'huile de 90 mm de diamètre.

14. Procédé selon la revendication 13, dans lequel le voile de nanofibres a une efficacité de filtration d'au moins 99,9%.

15. Procédé selon la revendication 14, dans lequel le voile de nanofibres a une efficacité de filtration d'au moins 99,999%.

16. Procédé selon la revendication 10, dans lequel le voile de nanofibres a une perte de charge qui est inférieure à 200 mm de H₂O.

17. Procédé selon la revendication 10, dans lequel les nanofibres polymères sont constituées d'un polymère synthétique qui est choisi parmi un polyamide, polyimide, polyaramide, polybenzimidazole, polyétherimide, polyacrylonitrile, poly(téréphtalate d'éthylène), polyaniline, poly(oxyde d'éthylène), poly(naphtalate d'éthylène), poly(téréphtalate de butylène), caoutchouc de styrène-butadiène, polystyrène, poly(chlorure de vinyle), poly(alcool vinylique), poly(fluorure de vinylidène), poly(vinylbutylène) et leurs copolymères ou dérivés.

18. Procédé selon la revendication 17, dans lequel le polymère synthétique est un polyamide.
